Europäisches Patentamt

European Patent Office

Office européen des brevets

(19)

(11) Publication number: 0 280 415
A1

# EUROPEAN PATENT APPLICATION

(12)

(21) Application number: 88300807.0

(22) Date of filing: 01.02.88

(51) Int. Cl.⁴ A23J 1/04 , A23J 1/02

(30) Priority: 31.01.87 GB 8702171

(43) Date of publication of application:
31.08.88 Bulletin 88/35

(84) Designated Contracting States:
ES

(71) Applicant: Kirk, William McLean
"Maybank"
Mallaig Scotland(GB)

Applicant: Gordon, John James
Railway Cottage Capelrig Road
Newton Mearns Glasgow Scotland(GB)

(72) Inventor: Kirk, William McLean
"Maybank"
Mallaig Scotland(GB)
Inventor: Gordon, John James
Railway Cottage Capelrig Road
Newton Mearns Glasgow Scotland(GB)

(74) Representative: Szczuka, Jan Tymoteusz
Cruikshank & Fairweather 19 Royal
Exchange Square
Glasgow G1 3AE Scotland(GB)

(54) Protein extracts.

(57) The present invention provides a process for preparing a substantially water-soluble protein extract from animal tissue. The process involves providing undenatured protein-containing animal tissue, and selecting an enzyme means comprising a narrow spectrum endoproteolytic enzyme system substantially free of exoproteolytic enzymes, for limited hydrolysis of the tissue substantially without production of amino acids and/or low molecular weight peptide fragments. The tissue is rapidly heated up to the enzyme working temperature and the enzyme added to the tissue in an aqueous medium; whilst maintaining the mixture at a pH within the working range of the enzyme. Tissue hydrolysis is effected for a limited period of time sufficient to hydrolyse the tissue so as to release proteins and/or high molecular weight polypeptide fragments substantially without reduction to free amino acids or peptides with undesirable characteristics. A substantial oil and/or solids components are separated off and the enzyme quickly removed or deactivated so as to prevent further hydrolysis of protein and/or polypeptide.

EP 0 280 415 A1

## PROTEIN EXTRACT

This invention relates to the processing and extraction of a substantially soluble, odourless protein suitable for use in food processing from animal tissues, including extraction from unwanted fish scraps such as head, tail, and frame as well as from whole fish that have been gutted, especially "trash" fish that are not suitable for retail outlet.

It is generally recognised that there is a considerable quantity of protein potentially available from the vast unexploited fisheries of the sea, and from the processing scraps that remain after the fillet has been removed from exploited fish. It is therefore desirable to develop processes for the extraction of protein from such sources to provide a supply of protein that can have application in the food industry and have high nutritional value for human and animal consumption. In addition it is desirable that the process should be capable of large scale production at low cost.

By means of various industrial processes it is possible to convert fish scraps and trash fish to fish meal or fish protein concentrate (FPC), and it is estimated that about 50% of the total annual fish catch is converted to FPC and fish meal. Such products however, have low biochemical and nutritional value due to the process operating conditions used which generally promote denaturation and poor solubility of the extracted protein. In addition fish meal products have a high content of unsaturated lipids which are susceptible to oxidation causing odour and off-taste. Consequently fish meal and FPC are less suitable for human consumption and have poor efficiency as protein sources for animal food.

An alternative procedure that is gaining increasing acceptance is the preparation of fish protein hydrolysate (FPH). However the production of high quality protein preparations from fish scraps and trash fish presents considerable technical problems relating to odour, taste, nutritional value, functional properties such as emulsification, foaming ability, water holding etc. In general the procedure is concerned with the use of biological catalysts (protease or proteolytic enzymes) to catalyse hydrolysis of proteins with extraction of protein fragments including substantially and partially hydrolysed proteins i.e. protein polypeptide fragments of low molecular weight from complex tissues. Due to the above problems known FPH products generally have poor functional characteristics that exclude them from use in the food industry. Thus the final product generally contains a high proportion of low molecular weight peptides with poor functional properties including unpleasant bitter taste and poor solubility. Secondly the problem of spoilage due to bacterial contamination has generally necessitated the introduction of expensive equipment or the use of methods (e.g. boiling) that also adversely affect such functional properties. Thirdly the removal of fat and the prevention of fat oxidation products that cause odour has necessitated the use of solvents and techniques that have further detracted from the required functional characteristics of the final product.

It is an object of the present invention to avoid or minimise one or more of the above disadvantages.

It has now been found by the present inventors that soluble protein extracts with good functional characteristics can be obtained from animal tissue by controlled hydrolysis of tissue just sufficient to release soluble protein therefrom whilst avoiding any substantial hydrolysis of the protein in the course of its release or after its release. This is achieved inter alia by use of endo-proteolytic enzymes substantially free of exo-proteolytic enzyme to minimize peptide bond clearage producing free amino acids; use of substantially narrow spectrum enzyme systems to facilitate release of soluble protein with clearage at the minimum number of sites and minimize any further clearage beyond that necessary to release protein from the tissue which further clearage would result in the production of shorter and lower molecular weight polypeptide fragments; and use of short hydrolysis periods just sufficient to release protein from tissues without any significant further hydrolysis of the released protein. In practice it has been found that periods of not more than 40 minutes are preferred. Conveniently tissue hydrolysis periods of from 5 to 30 e.g. from 10 to 20 minutes are sufficient to release substantial amounts of soluble protein from the tissue.

Thus the present invention provides a process for preparing a substantially water-soluble protein extract from animal tissue, which process comprises the steps of: providing substantially undenatured protein-containing animal tissue, selecting an enzyme means comprising a narrow spectrum endo-proteolytic enzyme system substantially free of exo-proteolytic enzymes, for limited hydrolysis of said tissue substantially without production of amino acids and/or low molecular weight peptide fragments; rapidly heading said tissue up to a temperature at which said enzyme means has substantially proteolytic activity; adding said enzyme means to the tissue in an aqueous medium; and maintaining the mixture at a pH within a range at which said enzyme means has substantial proteolytic activity. for a limited period of time sufficient to hydrolyse the tissue so as to release proteins and or high molecular weight polypeptide fragments substantially without reduction to free amino acids or peptides with undesirable characteristics; separating off any substantial oil and/or solids components: and removing and/or deactivating said enzyme means so as to prevent further hydrolysis of protein and/or polypeptide.

With the process of the present invention there can be obtained a protein extract with high solubility and other good functional properties making it very suitable for use in the food processing industry.

In order to maximize extraction of soluble protein without prejudicing the functional characteristics thereof more than one endo-proteolytic enzyme type may be used. In accordance with the present invention though, such further endo-proteolytic enzymes are desirably used in separate tissue hydrolysis stages so as to release further soluble protein releaseable by the further enzyme type but not released by the previously used enzyme type with the minimum degree of hydrolysis of this further soluble protein. It is also possible to use more than one endo-proteolytic enzyme in each stage provided the number of different types is limited to a very small number e.g. 2 or possibly 3, in order to avoid as far as possible the hydrolysis of any protein released from the tissue.

In accordance with the present invention there is used an endo-proteolytic enzyme system with a narrow spectrum of activity, that is one or more enzymes which catalyse cleavage of not more than a few different peptite bonds more or less remote from the ends of protein chains - as distinct from exo-proteolytic enzymes which progressively cleave peptide bonds at the free ends of protein or peptide chains. In this way the production of free aminoacids and low molecular weight polypeptide fragments can be avoided. In contrast it may be noted that commercially available protease preparations generally contain several or even many different enzymes having various proteolytic and/or hydrolytic activities. Thus in practice use of such preparations will result in many different hydrolytic reactions occurring which will have an important effect on the nature of the final product.

By selecting though, in accordance with the present invention, an enzyme system as defined above the problems of relatively uncontrolled hydrolysis which occur with conventionally used enzyme systems may be substantially avoided.

In accordance with the present invention, there may be used endo-proteolytic of any desired peptide bond specificity as well as more than one protease with different specificity, though as already noted the complete polypeptide or protein extraction process will involve the use of not more than a small number of different peptide bond specificity proteases. Advantageously the process of the present invention involves the use of an enzyme means having not more than 5, preferably not more than 3, different peptide bond specificities. Where the enzyme means used do have more than one peptide bond specificity, then the peptide bond hydrolysis is desirably carried out in more than one stage. Preferably, in such case the protease or proteases used in each peptide bond hydrolysis stage is inactivated and if desired removed before the next peptide bond hydrolysis (using a different peptide bond specificity protease) is carried out. The use of enzyme means with different peptide bond specificities and more than one peptide bond specificity protease in accordance with the process of the invention enables protein and polypeptide extraction from various tissues to be maximized whilst still substantially avoiding further hydrolysis and production of free amino acids and low molecular weight polypeptide fragments. Thus for example if the tissue to be processed is mainly made up of fish heads, skins and tails then there would desirably be used one or more proteases having high proteolytic activity against collagen based epidermal tissues, e.g.collagenase whilst if whole fish or more fleshy pieces are used then there is preferably used one or more proteases having high proteolytic activity against connective tissue.

Particular types of proteases that may be used in accordance with the present invention includes serine proteases and thiol proteases as well as endoproteinases from the acid protease and metallo-protease groups. Specific enzymes which may be mentioned include

Serine proteases:      trypsin,chymotrypsin, elastase, subtilisin ;

Thiol proteases:      papain bromelain ficin.

Metallo-endo proteases:      collagenase

Conversely the enzyme means used should be substantially free of exo-proteinases in the acid protease and metallo-protease groups as well as carboxypeptidases (e.g. A, B, P and Y) and peptidases (including aminopeptidase) in general.

It will be appreciated incidentially that proteolytic enzymes of the same type or specificity may be obtained from various different sources, e.g. different bacterial species, so that enzymes from different sources each of which however acts on the same peptide bond will still constitute a single proteolytic enzyme type in accordance with the present invention.

The process of the present invention provides a protein extract which on the one hand is not merely dispersible in water but is highly soluble in water without the need for high ionic strength, i.e. adding salts, or the need for high or low pH, i.e. adding alkali or acid. On the other hand the protein extract of the invention also exhibits little or no bitterness requiring masking and maintains a high proportion of the essential amino acid content of the source protein.

Various protein starting materials may be used in accordance with the present invention including naturally occurring animal protein-containing tissues, especially various types of fish and meat though desirably the protein source should be a relatively homogenous one. Desirably also there is used a protein source containing a high proportion of the essential amino acids that is those amino acids which cannot be synthesised by human metabolism. In this connection fish which contains a large proportion of myofibrillar protein is particularly preferred.

In accordance with the present invention it has been found that it is important that the protein source should be substantially undenatured, in particular not chemically denatured as for example by solvent extraction processes for producing protein concentrates or thermally denatured by cooking, and a particularly preferred protein source is fresh animal tissue especially fresh fish, though frozen fish and marinated fish may also be used.

Any suitable hydrolysis conditions may be employed in the process of the invention. In general these will be those providing optimum performance of the particular enzyme system used especially with regard to rate of hydrolysis and speed of achievement of the required degree of tissue hydrolysis in order to minimize unwanted protein hydrolysis and other side reactions. In general it may be noted that desirably the various steps of the process, at least prior to final processing, are performed as quickly as practicable in order to avoid excessive hydrolysis, denaturation and/or unwanted side reactions leading to tainting etc.

In general hydrolysis in accordance with the present invention is carried out so as to break the minimum of peptide bonds required to achieve solubilisation. without at the same time resulting in significant bitterness and/or loss of function of the amino acid content of the protein. The optimum degree of hydrolysis will depend on the types of peptide bonds broken which in turn is dependent on the enzymes used. It should moreover be noted that a greater degree of hydrolysis than the minimum may be effected without significantly prejudicing the properties of the hydrolysate provided the degree of hydrolysis is limited so as to avoid loss of emulsification capacity, bitterness, foaming ability etc. This can readily be determined for any desired enzyme system and hydrolysis conditions by routine laboratory experimentation.

In the case of hydrolysis of fish using enzyme systems such as those described in more detail hereinbelow, a protein extract consisting essentially of polypeptides having molecular weight in the range of from 15 kilodaltons to 125 kilodaltons has been found to have high solubility, good functional characteristics and acceptable taste properties. It will of course be appreciated that different specific enzyme systems of this invention can provide hydrolysates with diverse polypeptide molecular weight spectra and distributions without substantially prejudicing the quality of the extract.

Whilst fish is a relatively pure source of protein, it does nevertheless contain small quantities of other substances, and the present invention also provides, in a preferred aspect, means for removal thereof and purification of the protein extract obtained after protease catalysed hydrolysis in order to provide an even better product. Also, the reaction of contaminants with soluble protein can be avoided by creating conditions which are unfavourable for side reactions to proceed or, where side reactions could not be prevented, by inactivation or removal of potentially reactive substances.

In the past problems of odour, colour and fat removal have been generally tackled by using organic solvents to extract the compounds responsible for these problems. While in its immediate objective this approach is reasonably effective, it has a severely detrimental effect on important functional properties of the product. It should be recognised that extracted soluble fish protein is generally a soluble emulsion between fish lipids and fish protein and that coarse methods of fat removal such as organic solvent extraction cause generally irrecoverable damage to the emulsifying capacity of the extracted protein thereby reducing one of its more important functional characteristics which is particularly significant in high quality food grade proteins.

Purification may be carried out in accordance with the present invention by means of various suitable physical techniques known in the art for the purification of proteins including for example low temperature centrifugation, ultrafiltration, ion-exchange, dialysis, and preparative gel filtration, but not previously used in the preparation of fish protein extracts and the like. In general the separation means used will have a molecular weight cut-off (where separation is on the basis of size and/or molecular weight) in the range from 5,000 to 20,000 daltons, e.g. of the order of 10,000 daltons. Further details of suitable procedures are provided hereinbelow in a detailed description of the process.

As noted hereinabove commercially available enzyme preparations generally consist of mixtures of many different specific enzymes. Thus in an other preferred aspect the present invention includes the preliminary step of purifying a conventional protease preparation so as to remove exo-proteinases and other enzymes that catalyse reactions causing a decrease in the final quality of the end product and to provide endo-proteinase preparations with narrow specificity, preferably containing not more than 3, most preferably one 1, enzyme type. Desirably the purified endo-protease should contain not more than 10%, preferably not more than 5%, most preferably not more than 1% by weight of exo-proteinase. Advantageously the purified enzyme preparation should be substantially homogenous and comprise at least 80%, preferably at least 90%, by weight of a single endo-proteinase. The purification of commercial supplies of enzyme can be readily achieved using gel filtration taking account of the fact that most endo-proteolytic of interest generally have molecular weight values in the range from 15,000 to 28,000. Usually it is possible to purify the enzyme preparation in a single step operation, collecting the required protease fractions, concentrating them and then using them directly in the hydrolysis stage. It appears that at least some purified endo-proteinase preparations may be less stable than unpurified preparations and so purified enzymes are desirably used within a day or so of purification. The exact purification conditions are determined specifically for each individual protease and vary depending on the set-up and operation of the gel filtration equipment. Of course other methods of purification of proteases may also be used and the purification of proteases is not restricted to gel filtration procedures.

In a further aspect the present invention provides a highly water soluble protein extract of undenatured protein - containing animal tissue, preferably fish, consists of polypeptides having a molecular weight in the range of from 25 to 125 kilodaltons. Preferably the tissue hydrolysate contains a high proportion of the essential amino acids present in said undenatured protein.

Further preferred features and advantages of the invention will appear from the following detailed description given by way of example.

### Extraction of Protein from Fish

In the first stage, whole fish and/or fish scraps are comminuted using standard equipment designed to cut the fish into small pieces of about 2 to 3 cm3 in volume. To the solid pieces is then added an equal volume of water at 15-20°C and the mixture stirred slowly (10-20rpm) in a tank. The mixture is stirred for 10 minutes and then drained through a coarse sieve (100 μm hole size) in the bottom of the tank. The solid material is retained in the tank. The first liquid wash (FLW) contains soluble protein and is transferred to a holding tank before further processing. To the solid material is added a further volume of water containing 1% w/v NaCl at 20-25°C. After stirring for 15 minutes the mixture is drained as before. The second liquid wash (SLW) contains further soluble proteins and the SLW is diverted to the storage tank containing the FLW. To the solid material in the reaction tank is then added 0.05 volume of water and the mixture quickly heated up to 45°C. Bacillus licheniforms subtilisin ( a serine endo-protease enzyme) is then added to the gently stirring mixture (ca 20-40 rpm) to a level of 0.2g per kg (wet weight) of fish material, stirring is maintained at a level of 20-40 rpm for from 15 to 30 minutes until the mixture is converted to a thick soup-like consistency and the bones have settled to the bottom of the tank.

An equal volume of water at 5°C is added to the contents mixed by stirring gently for 10 minutes. The mixture is then drained through a coarse sieve in the bottom of the tank. The bones are retained on the sieve and are removed, dried and stored. The protein-containing mixture is next passed through a fine screen to retain particulate material and a liquid fraction is separated off. Alternatively the protein mixture is separated at low speed (2,500g) on a centrifuge. The liquid first stage extract (FSE) is diverted to a storage tank prior to further processing. The solid material is returned to the reaction tank and an equal volume of water at 45°C is added. The contents are mixed, maintained at 45°C and stirred 20-4o rpm for 10 minutes. Bromelain (a third endo-protease) is then added at a level of 0.05g per kg (wet weight) of particulate material. The mixture is stirred at 20-40rpm for 30 minutes then the mixture is cooled from 45°C to 10°C using a heat exchanger. To the mixture is added food grade acid (e.g. hydrochloric acid, citric acid, or phosphoric acid) to lower the pH of the mixture from pH 6.5 to pH 4.0.

The mixture is then diverted to a centrifuge and centrifuged at 2500g for 20 minutes at 10°C. The liquid supernatant represents the second stage extract (SSE).

As soon as each extract has been collected, any residual enzyme activity must be stopped in order to prevent deterioration of the product. This can be achieved by one of several methods. As the extract is collected it may be rapidly subjected to a suitable heat treatment e.g. heating to 90°C for 10 to 15 seconds followed by rapid cooling to 20-25°C, or heating quickly up to 70°C, maintaining this temperature for 5 mintues before rapid cooling to 20-25°C. Alternatively there may be used an acid inactivation e.g. by reducing the pH of the fraction to pH 3.5 (for example by adding hydrochloric acid or other suitable food grade acid).

Some precipitation of lipid complexes may occur after the enzyme inactivation step and these can be removed by filtration through a bed of Whatman No.1 2 papers and Whatman GFC2papers. Alternatively the precipitated material can be removed by centrifugation at 4000g for 15 minutes at low temperature e.g. 5°C at which lipids tend to coalesce to form an insoluble complex. The resulting solution should be substantially clear and will usually be lightly yellow in colour.

Thus four protein extracts are obtained from the above described process; first liquid wash (FLW), second liquid wash (SLW), first stage extract (FSE) and second stage extract (SSE). These may be bulked together or treated separately in the following further purification steps.

Further purification may be carried out to remove various low molecular weight contaminants using a noval combination of ion exchange and ultrafiltration techniques. The procedure employed is novel in that both cation and anion exchange materials may be used simultaneously with ultrafiltraion to enable a wide range of contaminants to be removed in a single step. In addition the system employs a molecular weight screen to prevent desirable high molecular weight proteins from binding to the ion-exchange material. Typically the ion-exchangers used are SP-Sephadex G50 and QAF-Sephadex A-50 mixed in equal proportions. These are contained in a dialysis bag or entrapped in 4% sodium alginate beads to screen the high molecular weight protein and polypeptide from the ion exchange materials whilst allowing the contaminants to pass through into the ion-exchange material to be retained thereby. This combination of ion-exchange and ultrafiltration washing reduces the overall time required for purification which is particularly advantageous since in general the extent and in particular the duration of any purification processing is desirably minimized as far as possible in order to limit any possible denaturation of protein or polypeptide. The washing phase is generally continued for some 2 to 4 hours to permit substantial removal of contaminants to be effected.

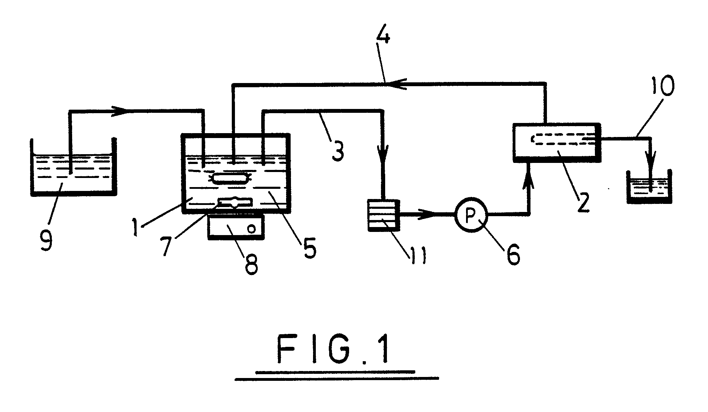

In more detail, the protein extract solution is circulated through an apparatus such as that illustrated in the accompanying drawing which comprises an ion exchange treatment chamber 1 and an ultrafiltration chamber 2 interconnected by two pipes 3, 4 for forward and return transfer of the protein extract solution 5 therebetween and provided with a pump 6 for circulating the solution between the chambers 1, 2. Additionally a magnetic stirrer means 7, 8 is provided at the ion exchange chamber 1 as well as a water supply means 9 for maintaining the dilution of the protein extract solution as water bearing contaminants is drawn off 10 at the ultrafiltration chamber 2. Conveniently the pump 6 is provided with a pre-fitter 11.

The ultrafiltration removes odour bearing molecules such as ammonia,methanethiol, dimethylamine, trimethylamine, ethylamine etc. The ion-exchange treatment removes very low molecular weight colour bearing materials such as breakdown products of melanin, myoglobin, haemoglobin etc.

The ultrafiltration system used will generally have a 10,000 nominal molecular weight cut-off e.g. Amicon YM membrane obtainable from the Amicon co. of

and suitable large scale equipment to handle of the order of 100 to 200 litres of solution per hour. The dialysis membrane should also have a molecular weight cut-off of 5,000-10,000 daltons. The membrane should desirably be hydrophilic with exceptionally low non-specific protein binding properties. As an alternative the ion-exchange materials could be entrapped in 4% sodium alginate beads, and the beads added directly to the stirred solution.

After purification the purified solution is desirably concentrated by ultrafiltration to provide a solution containing up to for example 60 to 70% w/v of protein or polypeptide. Conveniently this may be effected with the above described apparatus by simply disconnecting the water supply 9. Finally the concentrated solution can be readily dried to a powder using any suitable process e.g. drum drying or vacuum.

It is generally preferred to replace the ion-exchanger after one hour with fresh ion-exchange, the used ionexchanger being then washed and re-charged to permit re-use thereof.

As noted hereinbefore enzymes with 2 or more different specificities may be used in the process of the invention. In general it is preferred that there is first used a thiol proteinase followed, after inactivation thereof, by a serine proteinase. Nevertheless any desired combination and/or sequence of exoproteinase hydrolysis stages may be used depending on the desired functional characteristics of the final product.

Using a process as described above there was obtained a product having the following constitution:

Moisture 1.29%

Protein 89.0%

Ash 5.6%

Oil Less than 50 ppm

Non Protein Nitrogen and Carbohydrate (by Difference) 4.2%

## AMINO ACID ANALYSIS OF PROTEIN

|  | % |  | % |
|---|---|---|---|
| Leucine | 7.4 | Histidine | 1.8 |
| Lysine | 9.2 | Alanine | 7.1 |
| Phenylalanine | 3.1 | Aspartate | 10.4 |
| Methionine | 2.7 | Cystine | 0.1 |
| Threonine | 4.2 | Glutamate | 16.8 |
| Tryptophan | 1.1 | Glycine | 9.9 |
| Valine | 4.7 | Proline | 3.6 |
| Arginine | 6.8 | Serine | 4.9 |
| Isoleucine | 3.7 | Tyrosine | 1.6 |

The above product may be used as a taste and taint-free food supplement having a long shelf life and which is acceptable to the food supplement market due to its good foaming, binding and emulsifying properties. It is useful inter alia as a meat extender and confers smooth textual characteristics onto fish products for example, increasing the water holding capacity of pate and mousse. It also has utility as a use in "diet" food due to its low calories yet high nutritional content.

Modifications and improvements may be incorporated without departing from the scope of this invention.

## Claims

1. A process for preparing a substantially water-soluble protein extract from animal tissue, which process comprises the steps of: providing substantially undenatured protein-containing animal tissue, selecting an enzyme means comprising a narrow spectrum endo-proteolytic enzyme system substantially free of exo-proteolytic enzymes, for limited hydrolysis of said tissue substantially without production of amino acids and/or low molecular weight peptide fragments; rapidly heating said tissue up to a temperature at which said enzyme means has substantially proteolytic activity; adding said enzyme means to the tissue in an aqueous medium; and maintaining the mixture at a pH within a range at which said enzyme means has substantial proteolytic activity, for a limited period of time sufficient to hydrolyse the tissue so as to release proteins and/or high molecular weight polypeptide fragments substantially without reduction to free amino acids or peptides with undesirable characteristics; separating off any substantial oil and/or solids components; and removing and/or deactivating said enzyme means so as to prevent further hydrolysis of protein and/or polypeptide.

2. A process as claimed in claim 1 wherein are used at least two endoproteolytic enzymes having different peptide bond specificities in successive tissue hydrolysis stages with inactivation of the respective enzymes and recovery of soluble protein released from the tissue thereby, at each stage before the next stage.

3. A process as claimed in claim 1 or claim 2 wherein are used two endoproteolytic enzymes having different peptide bond specificities in one tissue hydrolysis stage.

4. A process as claimed in any one of claims 1 to 3 wherein are used endoproteolytic enzymes containing not more than 10% by weight of exoproteinase.

5. A process as claimed in any one of claims 1 to 4 wherein is used in the or each tissue hydrolysis stage, a substantially homogenous endoproteolytic enzyme with not more than 20% by weight of endoproteolytic enzyme of different peptide bond specificity.

6. A process as claimed in any one of claims 1 to 5 wherein is used an endoproteolytic enzyme selected from the groups of serine proteases thiol proteases, and metallo-endo proteases.

7. A process as claimed in claim 6 when dependent on claim 3 wherein is used a serine protease in one tissue hydrolysis stage and a thiol proteinase in a subsequent tissue hydrolysis stage.

8. A process as claimed in any one of claims 1 to 7 wherein the or each tissue hydrolysis stage extends for from 5 to 30 minutes.

9. A process as claimed in any one of claims 1 to 8 which includes the preliminary step of comminution of the tissue.

10. A process as claimed in any one of claims 1 to 9 which includes the preliminary step of purifying an enzyme preparation so as to provide said narrow spectrum endo-proteolytic enzyme system substantially free of exoproteolytic enzymes.

11. A process as claimed in any one of claims 1 to 10 which includes the step of purification of the protein extract by a physical fractionation process.

12. A process as claimed in claim 11 wherein the protein extract is subjected to ultra-filtration so as to remove low molecular weight colour bearing contaminants.

13. A process as claimed in claim 11 or claim 12 wherein the protein extract is subjected to ion-exchange, with screening of the soluble protein and/or polypeptide from the ion exchange material, so as to remove low molecular weight odour bearing contaminants.

14. A process as claimed in any of claims 11 to 13 which includes the step of lipid removal by at least one of filtration and low temperature centrifugation.

15. A process as claimed in any one of claims 1 to 14 which includes the step of pasteurization of the protein extract.

16. A process as claimed in any one of claims 1 to 15 wherein the enzyme means is inactivated thermally or by acidification with a food grade acid.

# FIG. 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 236 423 (HAARMANN & REIMER) * Claims 1,7,9-12; page 3, lines 11-14,31-36; page 5, lines 6-25 * | 1-3,6,7 ,9,10, 16 | A 23 J   1/04 A 23 J   1/02 |
| X | FR-A-2 308 320 (TENSEI SUISAN) * Claims 1,4,7; example 1 * | 1-3 | |
| X | US-A-3 697 285 (W.T. FAITH et al.) * Claims 1,6,7,11; column 3, lines 54-73 * | 1-3 | |

TECHNICAL FIELDS SEARCHED (Int. Cl.4)

A 23 J

The present search report has been drawn up for all claims

| Place of search | Date of completion of the search | Examiner |
|---|---|---|
| THE HAGUE | 14-06-1988 | PEETERS J.C. |